(19) **Europäisches Patentamt / European Patent Office / Office européen des brevets**

(11) **EP 4 254 724 A1**

(12) # EUROPEAN PATENT APPLICATION

(43) Date of publication:
04.10.2023 Bulletin 2023/40

(21) Application number: 22165064.1

(22) Date of filing: **29.03.2022**

(51) International Patent Classification (IPC):
**H02J 50/12** *(2016.01)* **H02J 50/80** *(2016.01)*
**H02J 50/90** *(2016.01)*

(52) Cooperative Patent Classification (CPC):
**H02J 50/80; H02J 50/12; H02J 50/90**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventor: **VAN WAGENINGEN, Andries
Eindhoven (NL)**

(74) Representative: **Philips Intellectual Property &
Standards
High Tech Campus 52
5656 AG Eindhoven (NL)**

(54) **WIRELESS POWER TRANSFER**

(57) A power transmitter (101) providing power to a power receiver (105) via an electromagnetic signal generated by an output resonance circuit comprising a transmitter coil (103) and at least one capacitor (303). A measurer (307) measures a loading parameter which is indicative of a loading of the transmitter coil (103) during a time interval where power transfer is inactive. A determiner (309) determines a maximum electromagnetic signal level for the electromagnetic signal during power transfer in response to the loading parameter. A driver (301) generates a drive signal for the output resonance circuit (103) to generate the electromagnetic signal. The driver (301) is arranged to constrain the drive signal such that the electromagnetic field signal does not exceed the maximum electromagnetic signal level during power transfer.

**FIG. 3**

EP 4 254 724 A1

**Description**

FIELD OF THE INVENTION

The invention relates to a wireless power transfer system and in particular, but not exclusively, to the operation of a power transmitter providing inductive power transfer to high power devices, such as e.g. kitchen appliances.

BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2KW.

A potential problem with wireless power transfer is that power may unintentionally be transferred to e.g. metallic objects that happen to be in the vicinity of the power transmitter. For example, if a foreign object, such as e.g. a coin, key, ring etc., is placed upon the power transmitter platform arranged to receive a power receiver, the magnetic flux generated by the transmitter coil will introduce eddy currents in the metal objects which will cause the objects to heat up. The heat increase may be very significant and may be highly disadvantageous.

In order to reduce the risk of such scenarios arising, it has been proposed to introduce foreign object detection where the power transmitter can detect the presence of a foreign object and reduce the transmit power and/or generate a user alert when a positive detection occurs. For example, the Qi system includes functionality for detecting a foreign object, and for reducing power if a foreign object is detected. Specifically, Qi specification version 1.2.1, section 11 describes various methods of detecting a foreign object.

One method to detect such foreign objects is disclosed in WO2015018868A1. Another example is provided in WO 2012127335 which discloses an approach based on determining unknown power losses. In the approach, both the power receiver and the power transmitter measure their power, and the receiver communicates its measured received power to the power transmitter. When the power transmitter detects a significant difference between the power sent by the transmitter and the power received by the receiver, an unwanted foreign object may potentially be present, and the power transfer may be aborted for safety reasons. This power loss method requires synchronized accurate power measurements performed by the power transmitter and the power receiver.

For example, in the Qi power transfer standard, the power receiver estimates its received power e.g. by measuring the rectified voltage and current, multiplying them and adding an estimate of the internal power losses in the power receiver (e.g. losses of the rectifier, the receiver coil, metal parts being part of the receiver etc.). The power receiver reports the determined received power to the power transmitter with a minimum rate of e.g. every four seconds.

The power transmitter estimates its transmitted power, e.g. by measuring the DC input voltage and current of the inverter, multiplying them and correcting the result by subtracting an estimation of the internal power losses in the transmitter, such as e.g. the estimated power loss in the inverter, the primary coil, and metal parts that are part of the power transmitter.

The power transmitter can estimate the power loss by subtracting the reported received power from the transmitted power. If the difference exceeds a threshold, the transmitter will assume that too much power is dissipated in a foreign object, and it can then proceed to terminate the power transfer.

Alternatively, it has been proposed to measure the quality or Q-factor of the resonant circuit formed by the primary coil together with the corresponding capacitances and resistances. A reduction in the measured Q-factor may be indicative of a foreign object being present.

In some systems, the initialization of a power transfer is subject to a foreign object detection successfully being performed with the result that no foreign object detection is considered to present. However, if the test indicates that a foreign object may be present, the power transmitter will not initialize the power transfer. A Q-factor based test may often be advantageous for such operation.

The performance of the foreign object detection is subject to the specific operating conditions that are present when the test is actually performed. Further, foreign object detection is typically a very sensitive test where it is desired that relatively small changes caused by the presence of a foreign object is detected in an environment with possibly a large variation of the operating conditions and scenarios for which the test is being performed.

Therefore, foreign object detection tends to be suboptimal and tests may be susceptible to generate false positives (detect a foreign object when none is present) or false negatives (not detecting a foreign object when present). This may lead to undesired situations, and in particular may lead to power transfers not being performed even when no foreign object is present.

Hence, an improved power transfer operation would be advantageous and, in particular, an approach allowing increased flexibility, reduced cost, reduced complexity, improved operation, more accurate power transfer operation, more flexibly power transfer, improved suitability for higher power level transfers, and/or improved performance would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an electromagnetic signal; the power transmitter comprising: an output resonance circuit comprising a transmitter coil and at least one capacitor; a driver arranged to generate a drive signal for the output resonance circuit to generate the electromagnetic signal; a measurer arranged to measure a loading parameter, the loading parameter being indicative of a loading of the transmitter coil during a time interval where power transfer is inactive; a determiner arranged to determine a maximum electromagnetic signal level for the electromagnetic signal during power transfer in response to the loading parameter; and wherein the driver is arranged to constrain the drive signal such that the electromagnetic field signal does not exceed the maximum electromagnetic signal level during power transfer.

The invention may provide improved and/or facilitated performance and/or operation and/or implementation of a wireless power transfer system. The approach may provide an improved approach to adapting to the potential presence of any foreign objects being present. The approach may allow an approach where power transfer may in some scenarios proceed despite a foreign object potentially being present while simultaneously ensuring safe operation and preventing unacceptable heating of the foreign object.

In many embodiments, the determiner may be arranged to determine at least two different non-zero values of the maximum electromagnetic signal level for different values of the loading parameter. In many embodiments, the maximum electromagnetic signal level may be a monotonic function of the loading parameter value.

The electromagnetic signal may be an electromagnetic field generated by the transmitter coil when the drive signal is applied to the output resonance circuit. The loading of the transmitter coil may be a loading or the electromagnetic signal/ electromagnetic field generated by the transmitter coil when the drive signal is applied to the output resonance circuit.

In many embodiments, the time interval where power transfer is inactive may be a time interval prior to a power transfer/ power transfer phase being initiated. The time interval may be a time interval during a power transfer initialization phase. In some embodiments, the time interval where power transfer is inactive may be a time interval of a power transfer phase during which power transfer is suspended.

In many embodiments, the driver may be arranged to constrain the drive signal during a power transfer time interval or power transfer phase following the time interval where the power transfer is inactive.

In some embodiments, the transmitter coil may be one out of a plurality of transmitter coils generating an electromagnetic signal for power transfer to the power receiver. In such cases, the loading parameter may be a parameter indicative of a loading of the electromagnetic field generated by the combination of the transmitter coils (and thus also of the transmitter coil)

In accordance with an optional feature of the invention, the loading parameter comprises a coupling factor parameter indicative of a coupling factor between the transmitter coil and a power receiver coil of the power receiver.

This may allow particularly advantageous operation and/or performance in many embodiments.

In accordance with an optional feature of the invention, the loading parameter comprises a quality factor parameter indicative of quality factor of the output resonance circuit.

This may allow particularly advantageous operation and/or performance in many embodiments.

In some embodiments, the loading parameter comprises an equivalent series resistance parameter indicative of an equivalent series resistance of the transmitter coil.

In accordance with an optional feature of the invention, the loading parameter is a self-inductance parameter indicative of a self-inductance of the transmitter coil.

This may allow particularly advantageous operation and/or performance in many embodiments.

In accordance with an optional feature of the invention, the determiner is arranged to determine the maximum electromagnetic signal level in response to a measured value of the loading parameter relative to a value of the loading parameter for a reference positioning of the power receiver.

This may allow particularly advantageous operation and/or performance in many embodiments.

In accordance with an optional feature of the invention, the driver is arranged to determine a maximum transmitter coil current corresponding to the maximum electromagnetic signal level, and to control the drive signal to maintain a transmitter coil current to be below the maximum transmitter coil current.

This may allow particularly advantageous operation and/or performance in many embodiments. Constraining the maximum transmitter coil current may in many cases provide an improved control and limitation of the electromagnetic signal/ field being generated by the transmitter coil, and may thus more directly control the maximum power that may be dissipated in any potential foreign object being present.

In accordance with an optional feature of the invention, the loading parameter comprises a measured equivalent series resistance for the transmitter coil, and the driver is arranged to determine the maximum transmitter coil current in response to the measured equivalent series resistance relative to a minimum expected equivalent series resistance for the power receiver and power transmitter arrangement.

This may provide particularly advantageous operation and/or performance in many embodiments.

In accordance with an optional feature of the invention, the minimum expected equivalent series resistance is coupling factor dependent, and the determiner is arranged to determine a coupling factor between the transmitter coil and a power receiver coil of the power receiver, and to determine the minimum expected equivalent series resistance as a function of the coupling factor.

This may provide particularly advantageous operation and/or performance in many embodiments.

In accordance with an optional feature of the invention, the minimum expected equivalent series resistance is self-inductance dependent, and the determiner is arranged to determine a self-inductance parameter indicative of a self-inductance of the transmitter coil, and to determine the minimum expected equivalent series resistance as a function of the self-inductance.

This may provide particularly advantageous operation and/or performance in many embodiments.

In some embodiments, the minimum expected equivalent series resistance is resonance frequency dependent, and the determiner is arranged to determine a resonance frequency for the output resonance circuit, and to determine the minimum expected equivalent series resistance as a function of the resonance frequency.

In accordance with an optional feature of the invention, the power transmitter comprises a receiver arranged to receive an indication of a reference minimum expected equivalent series resistance from the power receiver, the reference minimum expected equivalent series resistance being a minimum equivalent series resistance for a transmitter coil of a reference transmitter coupled to a power receiver coil of the power receiver; and the determiner is arranged to determine the minimum expected equivalent series resistance in response to the reference minimum expected equivalent series resistance.

This may allow particularly advantageous operation and/or performance in many embodiments.

In accordance with an optional feature of the invention, the determiner is arranged to determine the minimum expected equivalent series resistance in response to a compensation of the reference minimum expected equivalent series resistance for a difference between a series resistance of the power transmitter coil relative to a reference series resistance of the transmitter coil of the reference transmitter.

This may allow particularly advantageous operation and/or performance in many embodiments.

In accordance with an optional feature of the invention, the determiner is arranged to determine the minimum expected equivalent series resistance as a function of the reference minimum expected equivalent series resistance and a self-inductance for the transmitter coil relative to a self-inductance of a power transmitter coil of the reference transmitter.

This may allow particularly advantageous operation and/or performance in many embodiments.

In some embodiments, the determiner is arranged to determine the minimum expected equivalent series resistance as a function of the reference minimum expected equivalent series resistance and a resonance frequency of the output resonance circuit to a resonance frequency of an output resonance circuit of the reference transmitter. The resonance frequencies may be angular resonance frequencies.

In some embodiments, the determiner is arranged to determine the minimum expected equivalent series resistance in dependence on a temperature and/or on operating frequency of the drive signal. In particular, the determiner is arranged to determine the minimum expected equivalent series resistance in dependence on the operating frequency of the drive signal relative to a resonance frequency of the output resonance frequency.

In accordance with an optional feature of the invention, the determiner is arranged to determine the measured equivalent series resistance in response to a decay rate for a free running oscillation of the output resonance circuit.

This may allow particularly advantageous operation and/or performance in many embodiments.

In accordance with an optional feature of the invention, the determiner is arranged to determine the measured equivalent series resistance in response to a measured resonance frequency of the resonance circuit.

This may allow particularly advantageous operation and/or performance in many embodiments.

In accordance with an optional feature of the invention, the determiner is arranged to determine the measured equivalent series resistance in response to a measured quality factor of the resonance circuit.

This may allow particularly advantageous operation and/or performance in many embodiments.

According to an aspect of the invention there is provided a method of operation for a power transmitter wirelessly providing power to a power receiver via an electromagnetic signal; the power transmitter comprising: an output resonance circuit comprising a transmitter coil and at least one capacitor; and the method comprises: generating a drive signal for the output resonance circuit to generate the electromagnetic signal; measuring a loading parameter, the loading parameter being indicative of a loading of the transmitter coil during a time interval where power transfer is inactive; determining a maximum electromagnetic signal level for the electromagnetic signal during power transfer in response to the loading parameter; and constraining the drive signal such that the electromagnetic field signal does not exceed the maximum electromagnetic signal level during power transfer.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

Fig. 1 illustrates an example of elements of a power transfer system in accordance with some embodiments of the invention;

Fig. 2 illustrates an example of an equivalence circuit for the power transfer system of fig. 1;

Fig. 3 illustrates an example of elements of a power transmitter in accordance with some embodiments of the invention;

Fig. 4 illustrates an example of a half bridge inverter for a power transmitter;

Fig. 5 illustrates an example of a full bridge inverter for a power transmitter;

Fig. 6 illustrates an example of elements of a power receiver in accordance with some embodiments of the invention;

Fig. 7 illustrates an example of a relative placement of a power transmitter and a power receiver;

Fig. 8 illustrates an example of a relative placement of a power transmitter and a power receiver;

Fig. 9 illustrates an example of a relationship between a quality factor and a coupling factor for different relative placements of a power transmitter and a power receiver;

Fig. 10 illustrates examples of equivalent electrical circuits of a power transmitter and a reference power transmitter; and

Fig. 11 illustrates an example of a decay of a free running oscillation for a resonance circuit of a power transmitter.

DETAILED DESCRIPTION OF THE EMBODIMENTS

The following description focuses on embodiments of the invention applicable to a wireless power transfer system utilizing a power transfer approach such as known from the Qi Specification or the Ki Specification. However, it will be appreciated that the invention is not limited to this application but may be applied to many other wireless power transfer systems.

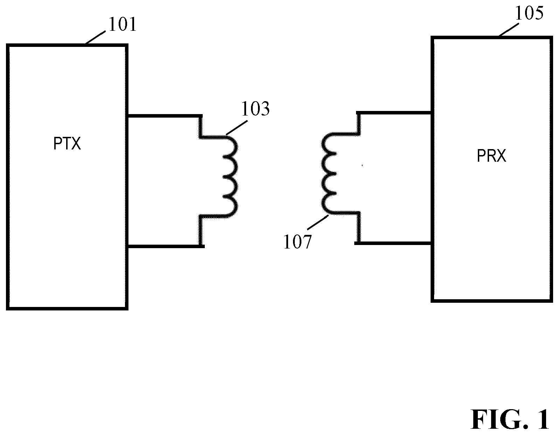

Fig. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic signal which may inductively transfer power from the power transmitter 101 to the power receiver 105. Specifically, the power transmitter 101 generates an electromagnetic signal, which is propagated as a magnetic flux by the transmitter coil or inductor 103. The electromagnetic signal is a signal generated by the transmitter coil 103 in response to a drive signal being provided to the transmitter coil 103. During power transfer the electromagnetic signal transfers power to the power receiver 105 (and specifically to the receiver coil 107) and it will in the following be referred to as the power transfer signal.

The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Qi or Ki Specifications (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

For many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

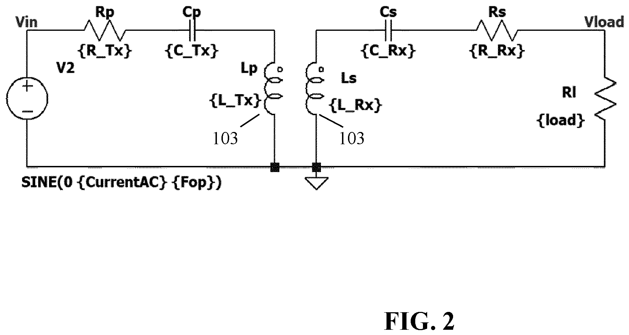

An example of an electrical equivalence diagram for the power transfer function of the power transmitter 101 and the power receiver 105 is illustrated in FIG. 2. A wide range of power transmitters and power receivers may exist in a given system and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

Furthermore, the power receiving devices may have several different modes in which they operate, such as for example with different Voltage levels (5V, 12V, 20V) to power the load.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The appliance sends this error signal to the power control function in the power transmitter to reduce the static error, ideally to zero.

However, since the system performance and operation vary greatly depending on the existing power transmitter and power receiver combination and placements, the appropriate operating point also varies greatly. This includes the conditions at start-up/ initialization of a power transfer.

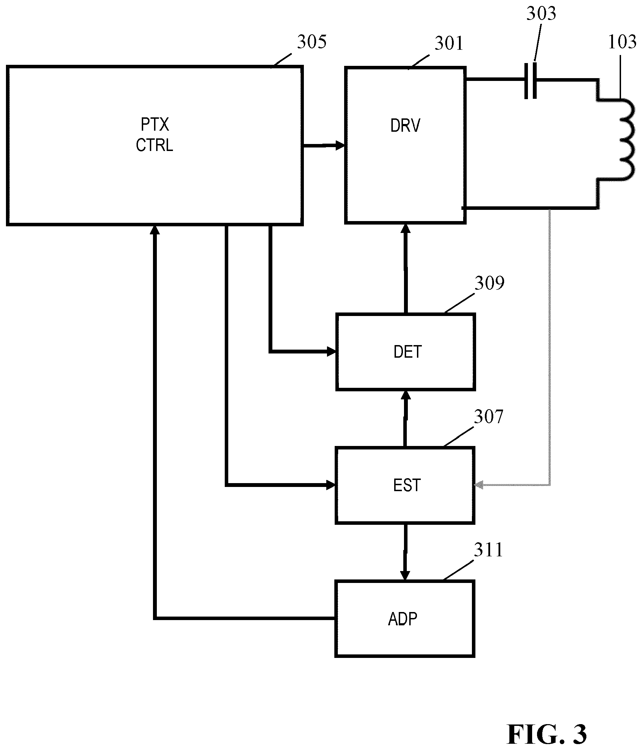

Fig. 3 illustrates elements of the power transmitter 101 of Fig. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one including multiple inductors and/or capacitors.

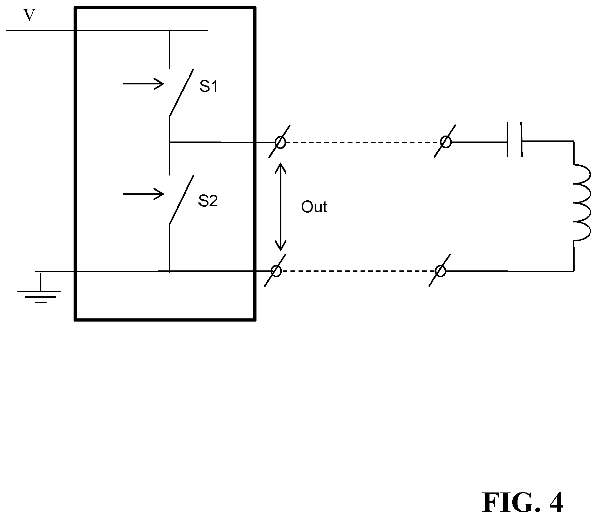

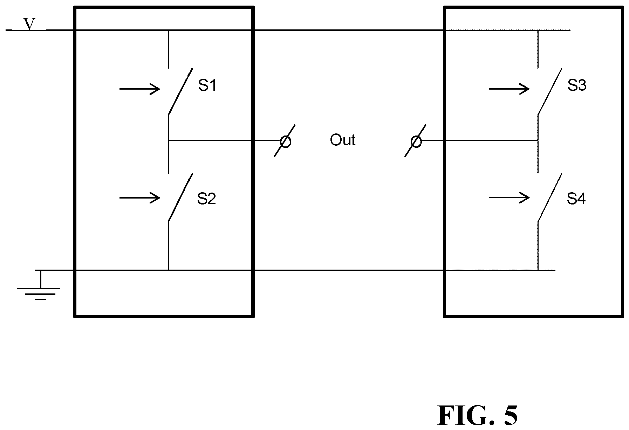

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi Specification or the Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

The power transmitter controller 305 may further comprise functionality for communicating with the power receiver 105. For example, the power transmitter controller 305 may be arranged to transmit data to the power receiver 105 by modulating the power transfer signal and receive data from the power receiver 105 by detecting load modulation of the power transfer signal. It will be appreciated that in other embodiments, other means of communication may be used such as e.g. a separate communication functionality such as NFC communication may be implemented.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

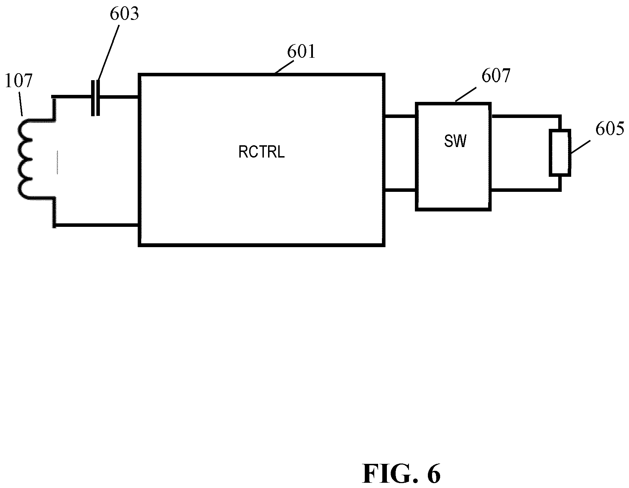

FIG. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits.

The power receiver controller 601 couples the receiver coil 107 to a load 605 via a switch 607 which specifically may be capable of connecting, disconnecting (or even shorting) the load 605. The power receiver controller 601 includes a power control path which converts the power extracted by the receiver coil 107 into a suitable supply for the load 605. In some embodiments, the power receiver controller 601 may provide a direct power path which simply connections the input resonance circuit to the switch 607 or load 605, i.e. the power path of the power transmitter controller 303 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi or Ki Specifications.

The power receiver controller 601 may further comprise functionality for communicating with the power transmitter 101. For example, it may be arranged to decode and demodulate data modulated onto the power transfer signal and it may be arranged to transmit data to the power transmitter 101 by load modulating the power transfer signal. In some embodiments, a separate communication function, such as an NFC communication function may be employed.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

At regular, and typically frequent, intervals, the power receiver transmits a power control error message to the power transmitter. The power receiver 105 comprises functionality for supporting such a power control loop, e.g. the power receiver controller 601 may continuously monitor the power or voltage of a load signal provided to the load and detect whether this is above or below a desired value. It may at regular intervals generate a power control error message which requests that the power level of the power transfer signal is increased or decreased, and it may transmit this power control error message to the power transmitter.

When receiving a power control error message from the power receiver, the transmit controller 305 may determine how the drive signal parameter should be modified to increase or decrease the power level of the power transfer signal as requested. It may then control and adapt the drive signal parameter accordingly.

A power control loop is accordingly employed which controls a power property of the power transfer signal to result in the desired operating point at the power receiver. The operation of the power transfer is thus controlled by a power control loop and the effective operation of this is critical to the performance of the system. Initializing or adapting the power control loop to the operation conditions is thus critical for optimum performance.

The power transmitter of FIGs. 1 and 3 comprise functionality for adapting the operation of the power transfer system to be more flexible than many existing approaches. Specifically, the power transmitter may be arranged to control the power transfer to more dynamically and flexibly adapt to the current conditions, such as e.g. to the likelihood that a foreign object is present. The power transmitter may be arranged to perform measurements/ estimates of the power transfer signal during a time interval where no power transfer is ongoing, such as during a power transfer initialization, and based on those measurements it may flexibly constrain the generated electromagnetic signal level/ field strength.

The power transmitter 101 specifically comprises a measurer 307 which is arranged to measure a loading parameter which is indicative of the loading of the transmitter coil during a time interval where power transfer is inactive. The power transfer may be inactive in that the power being extracted from the power receiver being below a threshold (e.g. below 1mW, 5mW, 20mW, 100mW, 200mW, 0.5W or 1W). An inactive power transfer may mean that no power is transferred to the load (605) of the power receiver. The loading parameter is indicative of the loading of an electromagnetic signal generated by the transmitter coil 103 when fed by a drive signal. The loading parameter is indicative of the loading of an electromagnetic field that is (or would be) generated by the transmitter coil 103. The loading parameter may specifically be indicative of a loading that would be experienced by a drive signal being fed to the transmitter coil 103.

Thus, the loading parameter may reflect the energy or power that may be extracted from the electromagnetic field generated by the transmitter coil 103. This loading may include contributions from the receiver coil 107, any foreign objects present, as well as friendly metal etc. in both the power receiver and the power transmitter. However, in many embodiments, the loading parameter may be compensated for known effects such as the loading provided by the power transmitter itself (e.g. due to friendly metal in the power transmitter).

The loading parameter is thus indicative of the loading that is experienced during a time when there is no power transfer, such as specifically prior to starting power transfer or e.g. during time intervals of power transfer phase where the power is temporarily suspended.

The measurer 307 is coupled to a determiner 309 which implements a circuit/ function for determining a maximum electromagnetic signal level for the electromagnetic signal during power transfer as a function of the loading parameter. A maximum level for the electromagnetic field during power transfer may be determined as a function of the loading parameter. It will be appreciated that the maximum electromagnetic signal level may be a level for any parameter that is indicative of the electromagnetic signal level/ field strength. For example, in many embodiments, it may be represented by a maximum level of a property of the drive signal being fed to the transmitter coil 103. In particular, the determiner 309 may determine the maximum electromagnetic signal level as a maximum level or current level for the drive signal. In many embodiments, the determiner 309 may determine the maximum electromagnetic signal level as a maximum value for the current through the transmitter coil 103.

The determiner 309 is arranged to determine the maximum electromagnetic signal level value to have at least two different non-zero values for different values of the loading parameter, and typically as a function of the loading parameter with different possible values for different values of the loading parameter. In many embodiments, the maximum level is a continuous monotonic function of the loading parameter. In many embodiments, the determiner 309 may be arranged to determine the maximum level to possibly have no less than 3, 5, 10, or 25 different values (for different values of the loading parameter). In many embodiments, the maximum level may be a one to one continuous function of the loading parameter with the maximum level potentially having an infinite number of possible values.

The determiner 309 is coupled to the driver 301 which is fed the determined maximum level. The driver 301 is arranged to constrain the drive signal such that the electromagnetic field signal does not exceed the maximum electromagnetic signal level during power transfer. The driver 301 may be arranged to generate the electromagnetic signal, the power transfer signal, to vary during the power transfer, e.g., in response to the power control loop operation as previously described. However, the driver 301 may generate and adapt the drive signal subject to the requirement that the maximum level is not exceeded. For example, the maximum level may be a maximum current of the drive signal and the driver 301 may be arranged to limit the drive signal to not exceed this current.

Thus, rather than using a conventional approach of performing a foreign object detection test and starting power transfer only if no foreign object is present, the described approach may take a substantially more flexible approach where the electromagnetic level is constrained but adapted to the specific scenario.

The approach may in particular be used to provide an improved pre-power transfer adaptation to whether a foreign object is present or not.

The accuracy of conventional foreign object detection methods depends on the alignment of the power transmitter and power receiver coils. If the coils are not well aligned, the coupling between the coils is not good and magnetic field generated by the power transmitter coil may leak to metallic parts of the power receiver device (so called friendly metal). The relative position of the transmitter coil towards the power receiver device that contains metal parts influences the pre-power foreign object detection measurements at the power transmitter coil.

This may for example result in information provided by the receiver device on the expected / reference measurements not matching the actual measurements when the alignment of the coils differs from the alignment applied as reference.

If the power receiver coil is not well aligned to the power transmitter coil, or if it is at an increased distance, it may lead to undesired situations such as where the power transmitter may potentially not detect a foreign object. In addition, the power transmitter may provide a strong magnetic field to compensate for a weak coupling which may increase the power loss in the foreign object even more. Another unfortunate situation may be that the power transmitter falsely detects the friendly metal as being a foreign object and therefore it does not start power transfer.

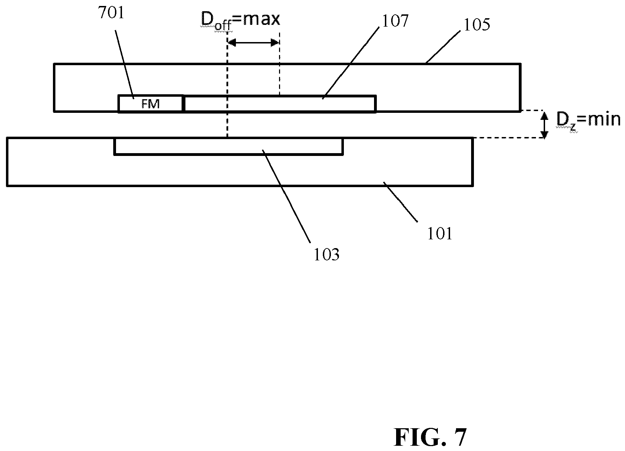

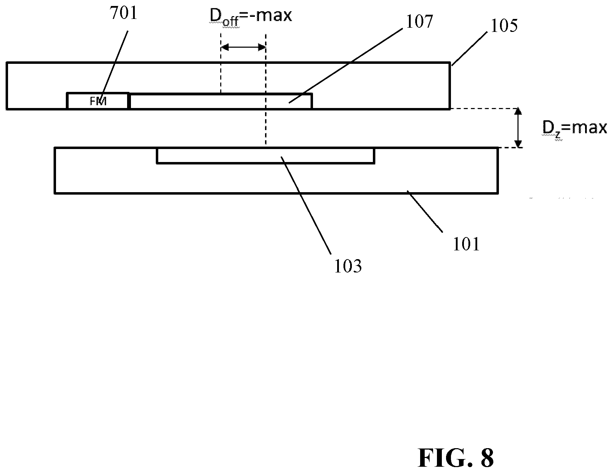

FIGs. 7 and 8 illustrate these problems for some different alignments of the coils for a pre-power foreign object detection based on Q factor measurements. In the examples, the power receiver 105 includes some friendly metal 701 positioned next to the receiver coil 107. The friendly metal will load the electromagnetic field generated by the transmitter coil 103.

If the power transmitter performs foreign object detection by determining a Q factor for the output resonance circuit comprising the transmitter coil 103 then the friendly metal will reduce the measured Q factor. The Q factor foreign object detection may determine the Q factor and consider a foreign object to be present if this is below a reference threshold. The reference threshold may be adapted to take into account that the friendly metal 701 of the power receiver 105 will reduce the Q factor, e.g. based on information transmitted to the power transmitter from the power receiver. However, the size of the degradation is dependent on the relative positioning of the power transmitter and power receiver and thus will typically be unknown for the current scenario.

As an example, the situation of FIG. 8 corresponds to that of FIG. 7 except that the power receiver device is shifted such that the friendly metal 701 (FM) is less exposed to the magnetic field of the transmitter coil. This increases the measured Q factor. Thus, the Q factor when no foreign object is present may vary substantially when the alignment between the power receiver and the power transmitter is changed.

Selecting a suitable reference threshold for detecting a foreign object may accordingly be very difficult. If the power receiver and power transmitter are aligned such that the friendly metal has minimum impact, the effect of a foreign object may not degrade the Q factor sufficiently to fall below the threshold. Conversely, if the power receiver and power transmitter are aligned such that the friendly metal has maximum impact, the Q factor may possibly fall below the reference threshold due only to the presence of the friendly metal and with no foreign object being present. Thus, the risk of false negatives or false positives may be higher than desired.

In the described approach, however, a loading parameter may be determined and this may be used as an indicator of the alignment position of the power receiver relative to the power transmitter and/or may be considered as an indication helping to assess the presence/absence of a foreign object. However, rather than proceeding with or preventing power transfer based on whether a foreign object is considered to be present or not, the power transmitter of FIG. 2 proceeds to adaptively determine a maximum electromagnetic signal level for the power transfer and then continuing with the power transfer subject to the drive signal being constrained such that the maximum level is not exceeded.

Thus, a substantially more flexible approach that may allow power transfer to proceed while ensuring safe operation may be achieved.

In some embodiments, the loading parameter may be a quality factor parameter indicative of quality factor of the output resonance circuit. In some embodiments, the loading parameter may be an Equivalent Series Resistance (ESR) indication for the transmitter coil 103. The ESR indication may be any indication of the equivalent series resistance of the transmitter coil 103 for the current loading of the generated electromagnetic field.

The Q factor may for example be measured by a frequency sweep determining e.g. the 3dB bandwidth and calculating the Q value. The ESR may for example be measured based on a decay rate of a free running oscillation as will be described in more detail later.

It will be appreciated that various approaches for determining a Q factor and/or an ESR will be known to the skilled person and that any such suitable approach may be used.

In some embodiments, the loading parameter may comprise or consist in a coupling factor parameter. The coupling factor may be indicative of the coupling between the transmitter coil 103 and the receiver coil 107. A high coupling factor may indicate that the transmitter coil 103 and the receiver coil 107 are closely aligned whereas a lower coupling factor may indicate that transmitter coil 103 and the receiver coil 107 are not closely aligned. Thus, the coupling factor may be a good indication of the relative position/ alignment of the transmitter coil 103 and the receiver coil 107, and thus of the power transmitter 101 and the power receiver 105.

Different approaches may be used to determine a coupling factor K in different embodiments. In some embodiments, the power transmitter may proceed to measure/ estimate the coupling factor by determining one or more resonance frequencies for the power transmitter resonance circuit when loaded by the power receiver. The power receiver may be entered into a high-Q mode during such a measurement and the resonance frequency may be determined by the power transmitter by a frequency sweep of the signal driving the transmitter coil 103. Based on the resonance frequency, the coupling factor can be calculated based on the free running resonance frequencies of the power receiver resonance circuit and the power transmitter resonance circuit.

In some embodiments, the coupling factor may be determined based on a ratio between the voltage $u_2$ over the receiver coil 107 when unloaded and the voltage $u_1$ over the transmitter coil 103, and on the ratio between the self inductances of respectively the transmitter coil 103 ($L_1$) and the receiver coil 107 ($L_2$):

$$K = \frac{u_2}{u_1} \sqrt{\frac{L_1}{L_2}}$$

Measurements may be made by the power receiver 105 and communicated to the power transmitter 101.

In some embodiments, measurements of the inductance of the transmitter coil 103 may be made for a situation where the receiver coil 107 is open ($L_1$) and when it is short-circuited ($L_1'$). The coupling factor may then be determined from:

$$K = \sqrt{1 - \frac{L_1'}{L_1}}$$

In some embodiments, measurements of the effective resonance frequency of the output circuit may be made for a situation where the receiver coil 107 is open ($f_{res}$) and when it is short-circuited ($f_{res}'$). This may for example be implemented by the power receiver including a switch function at the receiver coil 107. The coupling factor may then be determined from:

$$K = \sqrt{1 - \frac{f_{res}^2}{f_{res}'^2}}$$

It will be appreciated that other approaches for determining or estimating a coupling factor K may be used in other embodiments.

In some embodiments, the loading parameter may comprise or be a self-inductance parameter indicative of a self-inductance of the transmitter coil. The self- inductance may for example be determined by:

$$L = \frac{1}{\omega_{res}^2 \, C}$$

where C is the capacitance of the output resonance circuit and $\omega_{res}$ is the angular resonance frequency of the output resonance circuit.

The capacitance C will be known, and the angular resonance frequency may be measured. For example, a frequency sweep may be performed and the frequency for the maximum voltage may be detected $\omega_{res} = 2\pi f_{res}$. As another example, the cycle time T between zero crossings at free running of the output resonance frequency may be measured and the angular resonance frequency may be determined as $\omega_{res} = \frac{2\pi}{T}$.

In many embodiments, the self-inductance may be a good indication or estimate of the alignment/ position of the power receiver with respect to the power transmitter.

In some embodiments, the resonance frequency may accordingly be used as an indicator of the position of the power receiver relative to the power transmitter coil.

A power receiver typically applies ferrite behind its receiver coil to bend the magnetic field back into the receiver coil and to reduce the field behind the ferrite. This has the advantages of increasing the self-inductance of the receiver coil, increase the mutual inductance with the power transmitter coil, and reduce the leakage of the field to metal parts and components in the power receiver product.

Depending on the position of the power receiver product to the power transmitter coil, the ferrite also influences the field near the transmitter coil and its self-inductance value. The closer the ferrite of the power receiver is to the power transmitter coil, the higher the self-inductance and with invariant capacitance in the resonance tank of the power transmitter, the lower the resonance frequency. Thus, in practice, this approach may provide particularly efficient operation due to the presence of ferrite in many practical power receivers.

The specific parameter used to constrain the electromagnetic signal level and the specific approach for determining the maximum electromagnetic signal level may be different in different embodiments.

In many embodiments, the maximum electromagnetic signal level may depend on the measured value of the loading parameter relative to a reference or nominal value of the loading parameter.

The reference or nominal value may be received from the power receiver, and may specifically be one or more of the following:

- a Quality (Q) factor
- an ESR
- a coupling factor K
- a self-inductance L of the transmitter coil
- a resonance frequency of the output resonance circuit.

The reference or nominal value may be one that corresponds to a maximum or optimum value for the loading parameter. For example, for coupling factor parameter, the reference value may be set to one. For a Q factor parameter, the reference value may for example be set to the Q factor that is expected if there is no loading of the transmitter coil 103.

In some embodiments, the reference value may be one that corresponds to a reference positioning of the power receiver relatively to the power transmitter. The reference positioning may specifically be an optimal positioning of the power receiver and/or a position that results in a maximum or minimum value of the loading parameter.

For example, the reference value and/or position may be a position for which:

- The highest efficiency of power transfer / lowest power loss is achieved
- The coupling between the transmitter coil 103 and the receiver coil 107 is maximized.
- The stray field is minimized.
- The power loss in transmitter for generating the unused stray signal is minimized
- The interference with other devices is minimized.
- The friendly metal is least exposed

In many embodiments, the reference position may be considered the one providing an optimal value of the loading parameter.

In some embodiments, the measured loading parameter may be compared to such a reference parameter indicating a desired value of the loading parameter. The maximum level may then be determined as a monotonic function of the difference between the measured value and the reference value. Specifically, the closer the measured loading parameter value is to the reference value, the higher the maximum level. This may thus reflect that the closer the actual loading parameter value currently is to the preferred optimum value, the less potential loss in a foreign object may occur. In other words, it may be considered that the closer the value of the loading parameter is to the optimum value, the lower the value of the power that could possibly be dissipated in a potential foreign object if that were present.

In some embodiments, the maximum level is determined in response to the measured loading parameter value relative to a reference value that is indicative of a least preferred but acceptable value. For example, a minimum acceptable Q factor or coupling factor may be determined.

If the loading parameter does not meet such a least acceptable value, no power transfer may be performed. However, if the threshold is passed, the maximum level may be dependent on the difference between the loading parameter and the least acceptable threshold. Typically, the maximum level may be a monotonic (typically increasing) function of this difference. Thus, the further the actual loading parameter value is from the minimum acceptable value, the higher the allowed signal level. This may e.g. be used to ensure that the total effect of any signal dissipated in a foreign object will still be acceptable if such an foreign object were present.

It will be appreciated that in many embodiments, both a most preferred reference value and a least acceptable reference value may be used, or indeed one may be determined from the other. For example, the least acceptable reference value may be given as the most preferred reference value offset by a predetermined amount.

A reference loading parameter may be related to the positioning of the power receiver's device to a reference transmitter coil. This may be at a position of the power receiver at which the loading parameter is most preferred or at a position at which the loading parameter is least acceptable. Alternatively, a reference loading parameter may be determined by taking the average of loading parameter values for multiple positions of the power receiver. In that case, the plus minus deviation from the average may provide additional information to let the power transmitter determine a most preferred and a least acceptable loading parameter for these positions.

Thus, rather than simply deciding whether to perform power transfer or not, the power transmitter may constrain the signal level of the electromagnetic signal to result in acceptable performance even if a foreign object is present. The approach may provide a flexible approach where uncertainty of the cause of deviations from the optimum situation is handled to allow some power transfer while ensuring that even in the worst case scenario, this operation will be acceptable.

In some embodiments, the maximum signal level may be given as a power level value. Further, in many embodiments, the loading parameter may be compared to thresholds and the maximum level may be set to a predetermined value for the interval in which the current value falls.

For example, for a Q factor loading parameter, the determiner 309 may e.g. implement the following rule:

| Q ←→ threshold | Max safe power signal(Q) |
| --- | --- |
| Q < Thr1 | level 1 (<5W) |
| Thr1 <= Q < Thr2 | Level2 (5..15W) |
| Thr2 <= Q | Level3 (15..30W) |

For a K factor loading parameter, the determiner 309 may e.g. implement the following rule:

| K ←→ threshold | Max safe power signal (K) |
| --- | --- |
| K < Thr1 | level 1 (<5W) |
| Thr1 <= K < Thr2 | Level2 (5..15W) |
| Thr2 <= K | Level3 (15..30W) |

In some embodiments, the determiner 309 may be arranged to determine a maximum transmitter coil current and the driver 301 may be arranged to constrain the drive signal to constrain the transmitter coil current to not exceed this value during power transfer. Further, the determination may be a continuous function of the loading parameter. For example, a maximum transmitter coil current $I_{max}$ may be determined based on a loading parameter in the form of a measured coupling factor K as:

$$I_{max} = I_{ref} \sqrt{\frac{K}{K_{max}}}$$

where K$_{max}$ is the optimal/ maximum coupling factor for the power transmitter and power receiver (specifically when these are optimally aligned) and I$_{ref}$ is the maximum transmitter coil current for the situation where the coupling factor is optimal/ maximum.

The maximum level being a maximum transmitter coil current level/ value may provide particularly efficient operation in many scenarios and embodiments. The generated electromagnetic field strength is directly given by the transmitter coil current and thus the potential power level that can be induced in a foreign object is directly controlled by the transmitter coil current.

In some embodiments, the determination of the maximum level, and specifically the maximum level of a transmitter coil current, is dependent on determining an equivalent series resistance measure which is indicative of the ESR of the transmitter coil 103. The measured/actual ESR may then be compared to a minimum expected Equivalent Series Resistance for the power receiver and power transmitter arrangement. This minimum expected ESR may be an ESR that has been determined for power transmitter and power receiver arrangement by measurements.

For example, during manufacturing or a development phase of a power receiver and/or power transmitter devices, measurements may be performed to determine how the power receiver affects the loading of the field generated by the transmitter coil of the power transmitter. Typically, such measurements may be performed for a standardized/reference power transmitter and the power receiver may, based on the measurements, store information indicating how the power receiver, and specifically the friendly metal of the power receiver, loads the power transmitter. The power receiver may then in use communicate this data to a power transmitter which can take this it account when performing foreign object detection. Such information may also be used to determine the maximum transmitter coil current.

In some cases, the measurements may seek to determine the minimum level of loading that the power receiver may present to the (reference) power transmitter. This may reflect the least impact that friendly metal etc. has on the power transfer signal for different positions. The power transmitter may then use this value as a best case scenario and assume that all other unaccounted for power loss will be in a foreign object. Thus, if the measured loading differs by too much from the minimum loading of the power receiver, a power transmitter may determine that a foreign object is (potentially) present.

In some embodiments, the power transmitter of FIG. 2 may determine an indication of a minimum expected ESR. This may be based on communication received from the power receiver, e.g. indicating a minimum load of the power receiver to a nominal or reference power transmitter. The determiner 309 may compare the measured ESR to the minimum expected ESR and determine the maximum transmitter coil current based on this comparison. In many embodiments, the maximum transmitter coil current may be a monotonically decreasing function of a difference between the measured ESR and the minimum expected ESR.

For example, in many embodiments, the maximum transmitter coil current may be determined as:

$$I_{max} = \frac{P_{FOmax}}{\sqrt{ESR_{actual} - ESR_{expmin}}}$$

where $P_{FOmax}$ is maximum power dissipation allowed in any foreign object that may be present, $ESR_{actual}$ is the measured ESR of the transmitter coil 103, and $ESR_{expmin}$ expected minimum ESR of the transmitter coil 103.

This expression accounts for the different positions of the power receiver relative to the power transmitter and assumes that the values are accurate measures of the current conditions. Measurements uncertainty may for example be taken into account by using the following expression for the maximum transmitter coil current:

$$I_{max} = \frac{P_{FOmax}}{\sqrt{ESR_{actual} - ESR_{expmin} + ESR_{uncert}}}$$

where $ESR_{uncert}$ represents the uncertainty of the ESR measurements.

Such an approach may allow an efficient operation where power transfer can be adapted to reflect uncertainty in whether a foreign object is present or not. It may in many scenarios allow power transfer that would otherwise not be performed due to a risk of a foreign object being present. This may be achieved while simultaneously ensuring safe operation even if a foreign object is present.

In many embodiments, a more nuanced approach may be used to determine the acceptable range, and specifically the determination may be based on a position indication for the power receiver relative to the power transmitter. Thus, rather than considering the minimum possible ESR for all possible positions, a minimum possible ESR for the position may be estimated and used. As previously described, different parameters may be used as a position indication.

In some embodiments, the coupling factor K may be determined and used as an indication of a position of the power receiver relative to the power transmitter. The coupling factor may for example be used to estimate a maximum expected quality factor for the coupling factor.

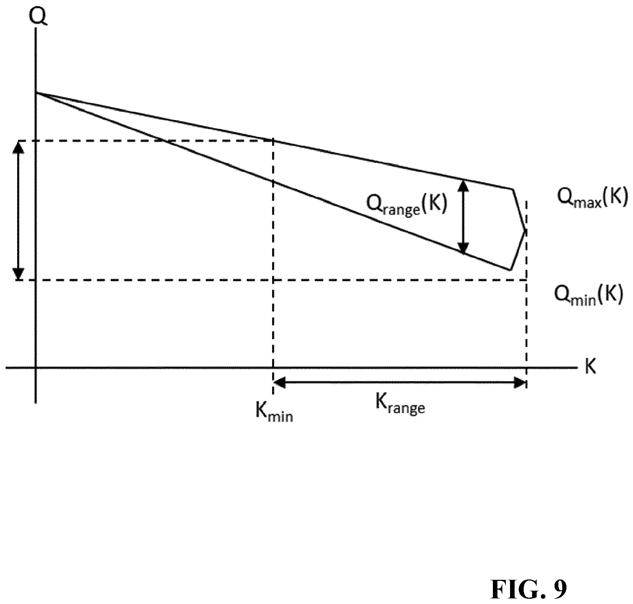

FIG. 9 illustrates an example of how the maximum Q-factor $Q_{max}$ and the minimum Q-factor $Q_{min}$ may vary as a function of the coupling factor. The relationship may for example be determined during a design or manufacturing phase by varying the position of the power receiver over an allowed space relative to a reference power transmitter, and measuring the coupling factor and Q factor for the different positions. Based on the measurements, the relationship of, in particular, the maximum Q-factor $Q_{max}$ may be determined. This relationship may be stored in the power receivers, e.g. as a function or as a look-up-table. When the power receiver initiates operation with a power transmitter, data may be transmitted from the power receiver to the power transmitter indicating how the maximum Q-factor $Q_{max}$ depends on the coupling factor K.

Once the K-factor has been measured, the maximum Q-factor $Q_{max}$ may be determined and the minimum expected ESR for this maximum Q-factor $Q_{max}$ may be determined.

For example, the power transmitter may measure the actual Q factor $Q_{actual}$, the coupling factor K, the resonance frequency $\omega_{res}$ and then proceed to calculate the maximum transmitter coil current from the following:

$$ESR_{expmin}(K) = \frac{\omega_{res} L}{Q_{expmax}(K)}$$

$$ESR_{actual} = \frac{1}{\omega_{res} Q_{actual} C}$$

$$I_{max} = \frac{P_{FOmax}}{\sqrt{ESR_{actual} - ESR_{expmin}(K)}}$$

where C is the capacitance of the output resonance circuit and L is the self-inductance of the transmitter coil 103.

When taking measurements uncertainty into account, the expression for the maximum transmitter coil current can be:

$$I_{max} = \frac{P_{FOmax}}{\sqrt{ESR_{actual} - ESR_{expmin}(K) + ESR_{uncert}}}$$

where $ESR_{uncert}$ represents the uncertainty of the ESR measurements.

In some embodiments, the minimum expected ESR may be considered to be dependent on the self-inductance of the transmitter coil 103. In such embodiments, the same approach may be used to characterize a power receiver as described above but with the measurements capturing the self-inductance L and the equivalent series resistance. In this case, the power receiver may store a relationship between the ESR of the transmitter coil and the self-inductance of the transmitter coil $ESR_{min}(L)$.

This information may be communicated to the power transmitter during operation and used to determine the maximum transmitter coil current. Specifically, the power transmitter may measure the resonance frequency $\omega_{res}$ and the actual ESR, $ESR_{actual}$. The maximum transmitter coil current may then be determined as follows:

$$ESR_{expmin}(L) = ESR_{expmin}\left(\frac{1}{\omega_{res}^2 C}\right)$$

$$ESR_{actual} = \frac{1}{\omega_{res} Q_{actual} C}$$

$$I_{max} = \frac{P_{FOmax}}{\sqrt{ESR_{actual} - ESR_{expmin}(L)}}$$

When taking measurements uncertainty into account, the expression for the maximum transmitter coil current may be:

$$I_{max} = \frac{P_{FOmax}}{\sqrt{ESR_{actual} - ESR_{expmin}(L) + ESR_{uncert}}}$$

where $ESR_{uncert}$ represents the uncertainty of the ESR measurements.

In some embodiments, the minimum expected equivalent series resistance may be resonance frequency dependent. Thus, in some embodiments, the determiner 309 may measure the resonance frequency for the output resonance circuit and then determine the minimum expected equivalent series resistance as a function of this resonance frequency.

As described above, the power transmitter may include functionality for receiving data providing information on a reference minimum expected equivalent series resistance from the power receiver. The reference minimum expected equivalent series resistance may be a minimum equivalent series resistance for a transmitter coil of a reference transmitter coupled to a power receiver coil of the power receiver. The power receiver may for example transmit data indicating a single value for the minimum expected ESR, or may e.g. transmit an indication of how this directly or indirectly depend on various parameters, such as the coupling facto K or the self-inductance L. The power transmitter may then proceed to determine the minimum expected ESR based on this data and the indicated reference minimum expected equivalent series resistance.

The information provided by the power receiver may for example include an indication of how the ESR (or a related parameter) depends on one or more of the following parameters that may be determined by the power transmitter:

- a Quality (Q) factor
- an ESR
- a coupling factor K
- a self-inductance L of the transmitter coil
- a resonance frequency of the output resonance circuit.

In some scenarios and embodiments, the power transmitter may be considered to be sufficiently similar to the reference power transmitter to allow the received data to be used directly. However, in other embodiments, the determiner 309 may be arranged to compensate for differences between the ESR of the reference transmitter and that of the actual power transmitter.

Thus, in some embodiments, the determiner 309 may be arranged to determine the minimum expected equivalent series resistance in response to a compensation of the reference minimum expected equivalent series resistance for a difference between a series resistance of the power transmitter coil relative to a reference series resistance of the transmitter coil of the reference transmitter.

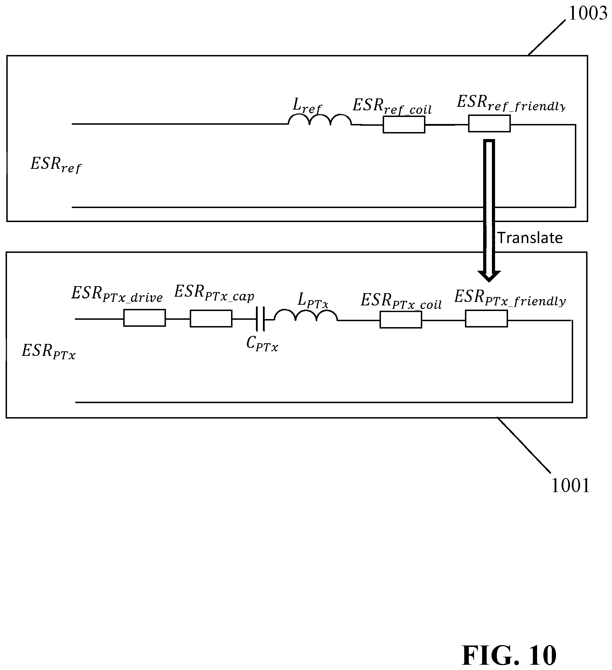

FIG. 10 illustrates an equivalent electric circuit for the power transmitter 1001 and an equivalent electric circuit for a reference power transmitter 1003.

As an example, suppose the minimum expected equivalent series resistance for the reference transmitter coil is:

$$ESR_{ref\_expmin} = ESR_{ref\_coil} + ESR_{ref\_friendly}$$

with

$ESR_{ref\_coil}$    ESR of the reference transmitter coil
$ESR_{ref\_friendly}$    ESR of the friendly metal of the power receiver

Then the minimum expected equivalent series resistance for the power transmitter coil can be expressed as:

$$ESR_{PTx\_expmin} = ESR_{PTX\_drive} + ESR_{PTx\_cap} + ESR_{PTx\_coil} + ESR_{ref\_friendly}$$

With

| | |
|---|---|
| $ESR_{PTX\_drive}$ | ESR of the driver |
| $ESR_{PTx\_cap}$ | ESR of the resonance capacitor |
| $ESR_{PTx\_coil}$ | ESR of the power transmitter coil |
| $ESR_{ref\_friendly}$ | ESR of the friendly metal of the power receiver |

As result:

$$ESR_{PTx\_expmin} = ESR_{PTX\_drive} + ESR_{PTx\_cap} + ESR_{PTx\_coil} + ESR_{ref\_expmin} - ESR_{ref\_coil}$$

In many embodiments, the determiner 309 may be arranged to determine the minimum expected ESR for the current power transmitter from the received minimum expected ESR for the reference transmitter taking into consideration e.g. a self-inductance of the power transmitter's transmitter coil $L_{PTx}$ relative to that of the reference transmitter coil $L_{ref}$.

In this case, the equivalent series resistance of the friendly metal for the power transmitter may be translated by considering the ratio between the inductance values:

$$ESR_{PTx\_friendly}(L_{PTx}) = \frac{L_{PTx}}{L_{ref}} ESR_{ref\_friendly}(L_{ref})$$

As result:

$$\begin{aligned} ESR_{PTx\_expmin} &= ESR_{PTX\_drive} + ESR_{PTx\_cap} + ESR_{PTx\_coil} \\ &+ \frac{L_{PTx}}{L_{ref}} (ESR_{ref\_expmin} - ESR_{ref\_coil}) \end{aligned}$$

Alternatively or additionally, the determiner 309 may in some embodiments consider the angular resonance frequency of the power transmitter $\omega_{PTx\_res}$ relative to that of the reference transmitter $\omega_{ref\_res}$.

In this case, the equivalent series resistance of the friendly metal for the power transmitter may be translated by considering the ratio between the resonance frequencies:

$$ESR_{PTx\_friendly}(L_{PTx}) = \left(\frac{\omega_{PTx\_res}}{\omega_{ref\_res}}\right)^x ESR_{ref\_friendly}(L_{ref})$$

Resulting in:

$$\begin{aligned} ESR_{PTx\_expmin} &= ESR_{PTX\_drive} + ESR_{PTx\_cap} + ESR_{PTx\_coil} \\ &+ \left(\frac{\omega_{PTx\_res}}{\omega_{ref\_res}}\right)^x (ESR_{ref\_expmin} - ESR_{ref\_coil}) \end{aligned}$$

with x depending on the properties of the power receiver's friendly metal.

In summary, the power transmitter may use the following operation to determine the expected minimum ESR:

$$ESR_{PTx\_expmin}$$
$$= ESR_{PTX\_drive} + ESR_{PTx\_cap} + ESR_{PTx\_coil}$$
$$+ \frac{L_{PTx}}{L_{ref}} \left(\frac{\omega_{PTx\_res}}{\omega_{ref\_res}}\right)^x \left(ESR_{ref\_expmin} - ESR_{ref\_coil}\right)$$

The above description considers the angular resonance frequency of the power transmitter for determining the equivalent series resistance at the power transmitter coil.

However, the power transmitter will typically drive at an angular operating frequency $\omega_{PTx}$ different from its resonance frequency $\omega_{PTx\_res}$ during power transfer.

Moreover, the equivalent series resistance at the reference transmitter coil may be measured at a fixed frequency $\omega_{ref}$ instead of at a resonance frequency $\omega_{ref\_res}$.

To take these differences into account, the power transmitter may proceed to perform the following determination:

$$ESR_{PTx\_expmin}$$
$$= ESR_{PTX\_drive} + ESR_{PTx\_cap} + ESR_{PTx\_coil}$$
$$+ \frac{L_{PTx}}{L_{ref}} \left(\frac{\omega_{PTx}}{\omega_{ref}}\right)^x \left(ESR_{ref\_expmin} - ESR_{ref\_coil}\right)$$

Finally. the power transmitter may take parameters, like the temperature *temp* and operating frequency $\omega_{PTx}$ influencing the individual elements that determine $ESR_{PTx\_expmin}$ into account, like:

$$ESR_{PTx\_expmin}$$
$$= ESR_{PTX\_drive}(temp) + ESR_{PTx\_cap} + ESR_{PTx\_coil}(temp, \omega_{PTx})$$
$$+ \frac{L_{PTx}}{L_{ref}} \left(\frac{\omega_{PTx}}{\omega_{ref}}\right)^x \left(ESR_{ref\_expmin} - ESR_{ref\_coil}\right)$$

For the actual equivalent series resistance, the power transmitter may take the difference between the operating frequency and the resonance frequency as follows into account.

Suppose the actual equivalent series resistance for the power transmitter coil $ESR_{actual}$ has be measured at the angular resonance frequency $\omega_{PTx\_res}$

$ESR_{actual}$ depends on the individual elements as follows.

For the angular resonance frequency:

$$ESR_{actual}\left(\omega_{PTx\_res}\right)$$
$$= ESR_{Ptx\_drive} + ESR_{Ptx\_cap} + ESR_{PTx\_coil}\left(\omega_{PTx\_res}\right)$$
$$+ ESR_{PTx\_friendly}\left(\omega_{PTx\_res}\right)$$

For the angular operating frequency:

$$ESR_{actual}(\omega_{PTx})$$
$$= ESR_{Ptx\_drive} + ESR_{Ptx\_cap} + ESR_{PTx\_coil}(\omega_{PTx})$$
$$+ ESR_{PTx\_friendly}(\omega_{PTx})$$

with

$$ESR_{PTx\_friendly}(\omega_{PTx}) = \left(\frac{\omega_{PTx}}{\omega_{PTx\_res}}\right)^x ESR_{PTx\_friendly}(\omega_{PTx\_res})$$

The power transmitter may determine the actual equivalent series resistance for the power transmitter coil at the angular operating frequency based on the measured equivalent series resistance measured at the resonance frequency by:

$$\begin{aligned} ESR_{actual}(\omega_{PTx}) \\ = ESR_{Ptx\_drive} + ESR_{Ptx\_cap} + ESR_{PTx\_coil}(\omega_{PTx}) \\ + \left(\frac{\omega_{PTx}}{\omega_{PTx\_res}}\right)^x \left(ESR_{actual}(\omega_{PTx\_res}) - ESR_{Ptx_{drive}} - ESR_{Ptx_{cap}}\right. \\ \left. - ESR_{PTx\_coil}(\omega_{PTx\_res})\right) \end{aligned}$$

As described above, the determiner 309 may determine the maximum transmitter coil current based on a consideration of a measured ESR, i.e. based on the actual ESR. In many embodiments, it may be challenging to measure this value directly and the power transmitter may use different more indirect approaches to measure the current ESR.

In some embodiments, the ESR may be measured by determining a decay rate for a free running oscillation of the output resonance circuit. The power transmitter may be arranged to initialize a free running oscillation and then measure a time for the oscillations to reduce to a given level. The ESR may then be calculated from this decay time.

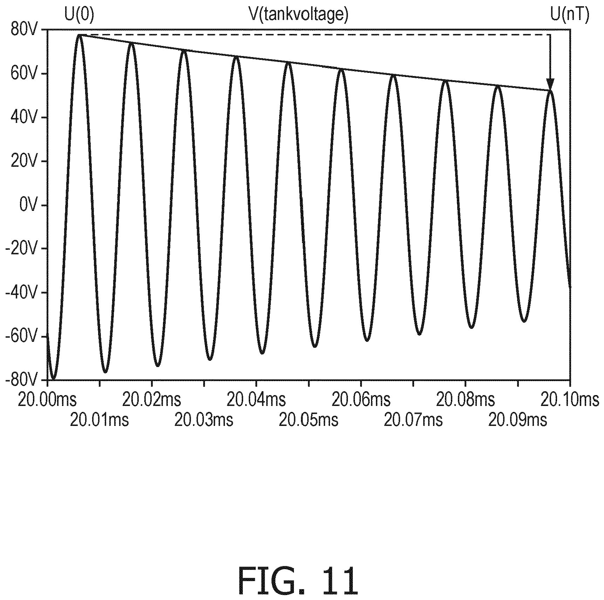

FIG. 11 illustrates an example of a free running oscillation of an output circuit of the power transmitter. The period of resonance is given by $T = 2\pi/\omega_{res}$ and the ESR may e.g. be determined from:

$$\frac{U(nT)}{U(0)} = e^{-\frac{\pi}{Q}n} \rightarrow Q = \frac{\pi n}{ln\left(\frac{U(0)}{U(nT)}\right)}$$

$$Q = \frac{1}{\omega_{res}ESR \times C} = \frac{T}{2\pi ESR \times C}$$

$$\frac{U(nT)}{U(0)} = e^{-\frac{2\pi^2 ESR \times C}{T}n} \rightarrow ESR = \frac{T}{2\pi^2 nC} ln\left(\frac{U(0)}{U(nT)}\right)$$

where the decay is measured over $n$ cycles of period $T$.

In some embodiments, the ESR may be determined from a measurement of the resonance frequency and/or the Q factor of the output resonance circuit. For example, the power transmitter may perform a frequency sweep and find the resonance frequency and the Q factor. For example, the Q factor may be determined from a 3dB bandwidth relative to the resonance frequency. The current ESR may then be determined from:

$$ESR_{actual} = \frac{1}{\omega_{res}Q_{actual}C}$$

In some embodiments, the ESR may be determined from only one measured value of the resonance frequency and the Q factor, for example by assuming a nominal value for the other parameter.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an electromagnetic signal; the power transmitter (101) comprising:

    an output resonance circuit comprising a transmitter coil (103) and at least one capacitor (303);
    a driver (301) arranged to generate a drive signal for the output resonance circuit (103) to generate the electromagnetic signal;
    a measurer (307) arranged to measure a loading parameter, the loading parameter being indicative of a loading of the transmitter coil (103) during a time interval where power transfer is inactive;
    a determiner (309) arranged to determine a maximum electromagnetic signal level for the electromagnetic signal during power transfer in response to the loading parameter; and

    wherein the driver (301) is arranged to constrain the drive signal such that the electromagnetic field signal does not exceed the maximum electromagnetic signal level during power transfer.

2. The power transmitter of claim 1 wherein the loading parameter comprises a coupling factor parameter indicative of a coupling factor between the transmitter coil and a power receiver coil of the power receiver.

3. The power transmitter of claim 1 or 2 wherein the loading parameter comprises a quality factor parameter indicative of quality factor of the output resonance circuit.

4. The power transmitter of any previous claim wherein the loading parameter is a self-inductance parameter indicative of a self-inductance of the transmitter coil.

5. The power transmitter of any previous claim wherein the determiner (309) is arranged to determine the maximum electromagnetic signal level in response to a measured value of the loading parameter relative to a value of the loading parameter for a reference positioning of the power receiver.

6. The power transmitter of any previous claim wherein the driver (301) is arranged to determine a maximum transmitter coil current corresponding to the maximum electromagnetic signal level, and to control the drive signal to maintain a transmitter coil current to be below the maximum transmitter coil current.

7. The power transmitter of claim 6 wherein the loading parameter comprises a measured equivalent series resistance for the transmitter coil, and the driver (301) is arranged to determine the maximum transmitter coil current in response to the measured equivalent series resistance relative to a minimum expected equivalent series resistance for the power receiver and power transmitter arrangement.

8. The power transmitter of claim 7 wherein the minimum expected equivalent series resistance is coupling factor dependent, and the determiner (309) is arranged to determine a coupling factor between the transmitter coil and a power receiver coil of the power receiver, and to determine the minimum expected equivalent series resistance as a function of the coupling factor.

9. The power transmitter of claim 7 or 8 wherein the minimum expected equivalent series resistance is self-inductance dependent, and the determiner (309) is arranged to determine a self-inductance parameter indicative of a self-inductance of the transmitter coil, and to determine the minimum expected equivalent series resistance as a function of the self-inductance.

10. The power transmitter of any previous claim 7 to 9 comprising a receiver arranged to receive an indication of a reference minimum expected equivalent series resistance from the power receiver, the reference minimum expected equivalent series resistance being a minimum equivalent series resistance for a transmitter coil of a reference transmitter coupled to a power receiver coil of the power receiver; and the determiner (309) is arranged to determine the minimum expected equivalent series resistance in response to the reference minimum expected equivalent series resistance.

11. The power transmitter of claim 10 wherein the determiner (309) is arranged to determine the minimum expected equivalent series resistance in response to a compensation of the reference minimum expected equivalent series resistance for a difference between a series resistance of the power transmitter coil relative to a reference series resistance of the transmitter coil of the reference transmitter.

12. The power transmitter of claim 11 wherein the determiner (309) is arranged to determine the minimum expected equivalent series resistance as a function of the reference minimum expected equivalent series resistance and a self-inductance for the transmitter coil relative to a self-inductance of a power transmitter coil of the reference transmitter.

13. The power transmitter of claim 7 to 12 wherein the determiner (309) is arranged to determine the measured equivalent series resistance in response to a decay rate for a free running oscillation of the output resonance circuit.

14. The power transmitter of claim 7 to 13 wherein the determiner is arranged to determine the measured equivalent series resistance in response to a measured resonance frequency of the resonance circuit.

15. The power transmitter of claim 7 to 14 wherein the determiner (309) is arranged to determine the measured equivalent series resistance in response to a measured quality factor of the resonance circuit.

16. A method of operation for a power transmitter (101) wirelessly providing power to a power receiver (105) via an electromagnetic signal; the power transmitter (101) comprising:
an output resonance circuit comprising a transmitter coil (103) and at least one capacitor (303);
and the method comprises:

generating a drive signal for the output resonance circuit (103) to generate the electromagnetic signal;
measuring a loading parameter, the loading parameter being indicative of a loading of the transmitter coil (103) during a time interval where power transfer is inactive;
determining a maximum electromagnetic signal level for the electromagnetic signal during power transfer in response to the loading parameter; and
constraining the drive signal such that the electromagnetic field signal does not exceed the maximum electromagnetic signal level during power transfer.

FIG. 1

FIG. 2

FIG. 3

**FIG. 4**

V

S1

S2

Out

S3

S4

**FIG. 5**

**FIG. 6**

701    $D_{off}$=max    107    105

FM    107

$D_z$=min

103    101

**FIG. 7**

**FIG. 8**

**FIG. 9**

**FIG. 10**

FIG. 11

Europäisches Patentamt
European Patent Office
Office européen des brevets

# EUROPEAN SEARCH REPORT

Application Number

EP 22 16 5064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/318869 A1 (BAE SU HO [KR]) 17 October 2019 (2019-10-17) | 1-6,16 | INV. H02J50/12 H02J50/80 H02J50/90 |
| A | * paragraph [0114] - paragraph [0215] * * paragraph [0299] - paragraph [0312] * * figures 1-17 * | 7-15 | |
| A | US 2017/222484 A1 (DEBAUN DAVID R [US] ET AL) 3 August 2017 (2017-08-03) * paragraph [0107] - paragraph [0119]; figures 1-6B * | 1-16 | |
| A | US 2019/027969 A1 (STARING ANTONIUS ADRIAAN MARIA [NL] ET AL) 24 January 2019 (2019-01-24) * paragraph [0027] - paragraph [0060]; figures 1-22 * | 1-16 | |
| A | US 2021/351634 A1 (GOODCHILD ERIC HEINDEL [US] ET AL) 11 November 2021 (2021-11-11) * paragraph [0046] - paragraph [0058]; figures 1-14 * | 1-16 | TECHNICAL FIELDS SEARCHED (IPC) |
| A | CN 108 923 549 A (SHENZHEN HUAYU WIRELESS POWER SUPPLY TECH CO LTD) 30 November 2018 (2018-11-30) * the whole document * | 1-16 | H02J |

The present search report has been drawn up for all claims

| Place of search | Date of completion of the search | Examiner |
|---|---|---|
| Munich | 8 September 2022 | Dudoignon, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 5064

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2022

| Patent document cited in search report | | | Publication date | Patent family member(s) | | Publication date |
|---|---|---|---|---|---|---|
| US 2019318869 | A1 | | 17-10-2019 | CN | 103683527 A | 26-03-2014 |
| | | | | CN | 107994660 A | 04-05-2018 |
| | | | | CN | 108092416 A | 29-05-2018 |
| | | | | EP | 2713475 A2 | 02-04-2014 |
| | | | | JP | 5744997 B2 | 08-07-2015 |
| | | | | JP | 2014068529 A | 17-04-2014 |
| | | | | KR | 20140040570 A | 03-04-2014 |
| | | | | US | 2014084701 A1 | 27-03-2014 |
| | | | | US | 2019088412 A1 | 21-03-2019 |
| | | | | US | 2019318869 A1 | 17-10-2019 |
| US 2017222484 | A1 | | 03-08-2017 | AU | 2017214479 A1 | 09-08-2018 |
| | | | | CA | 3012325 A1 | 10-08-2017 |
| | | | | CN | 109075613 A | 21-12-2018 |
| | | | | EP | 3203604 A1 | 09-08-2017 |
| | | | | EP | 3462574 A1 | 03-04-2019 |
| | | | | JP | 6956728 B2 | 02-11-2021 |
| | | | | JP | 2019509707 A | 04-04-2019 |
| | | | | KR | 20180101618 A | 12-09-2018 |
| | | | | US | 2017217325 A1 | 03-08-2017 |
| | | | | US | 2017222484 A1 | 03-08-2017 |
| | | | | WO | 2017136491 A1 | 10-08-2017 |
| US 2019027969 | A1 | | 24-01-2019 | BR | 112018014053 A2 | 11-12-2018 |
| | | | | CN | 108702028 A | 23-10-2018 |
| | | | | EP | 3403313 A1 | 21-11-2018 |
| | | | | ES | 2739000 T3 | 28-01-2020 |
| | | | | JP | 6615366 B2 | 04-12-2019 |
| | | | | JP | 2019502352 A | 24-01-2019 |
| | | | | RU | 2697808 C1 | 20-08-2019 |
| | | | | TR | 201910529 T4 | 21-08-2019 |
| | | | | US | 2019027969 A1 | 24-01-2019 |
| | | | | US | 2022029474 A1 | 27-01-2022 |
| | | | | WO | 2017121672 A1 | 20-07-2017 |
| | | | | ZA | 201805347 B | 27-05-2020 |
| US 2021351634 | A1 | | 11-11-2021 | CN | 113924711 A | 11-01-2022 |
| | | | | CN | 114207988 A | 18-03-2022 |
| | | | | EP | 3977581 A1 | 06-04-2022 |
| | | | | EP | 3977593 A1 | 06-04-2022 |
| | | | | JP | 7081867 B2 | 07-06-2022 |
| | | | | JP | 7114137 B2 | 08-08-2022 |
| | | | | JP | 2022526862 A | 26-05-2022 |
| | | | | JP | 2022528288 A | 09-06-2022 |
| | | | | KR | 20220006640 A | 17-01-2022 |
| | | | | KR | 20220006641 A | 17-01-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 22 16 5064

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2022

| Patent document cited in search report | Publication date | Patent family member(s) | | Publication date |
|---|---|---|---|---|
| | | US | 2020381959 A1 | 03-12-2020 |
| | | US | 2020381960 A1 | 03-12-2020 |
| | | US | 2021351634 A1 | 11-11-2021 |
| | | US | 2022278565 A1 | 01-09-2022 |
| | | WO | 2020243353 A1 | 03-12-2020 |
| | | WO | 2020243358 A1 | 03-12-2020 |
| CN 108923549 A | 30-11-2018 | NONE | | |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015018868 A1
- WO 2012127335 A